# EUROPEAN PATENT SPECIFICATION

(11) **EP 1 391 078 B1**
(45) Date of publication and mention of the grant of the patent: **17.09.2008**
(21) Application number: 02714639.8
(22) Date of filing: 28.03.2002
(51) Int. Cl.: H04L 12/14

(54) **Method for timing the duration of a session**
Verfahren zur Messung der Dauer einer Sitzung
Procédé pour le chronométrage de la durée d'une session

(30) Priority: 28.03.2001 GB 0107753
(43) Date of publication of application: 25.02.2004
(73) Proprietor: Elgrably, Eric, Casablanca (MA)
(72) Inventor: ELGRABLY, Eric, Casablanca (MA)
(74) Representative: Tanty, François
(86) International application number: PCT/NL2002/000205
(87) International publication number: WO 2002/078257

(56) References cited:
- EP-A- 0 939 516
- WO-A-01/09743
- WO-A-01/11506
- WO-A-98/02828
- WO-A-98/26571
- WO-A-98/43380

## Description

The present invention relates to data transmission networks such as the Internet.

Some operators provide Internet downloading of a Videotex emulator such as a plug-in or a Java applet providing access to Minitel^{®} services in France (see for example the World Wide Web site www.mctel.fr at the priority date). Not all Minitel^{®} services can be accessed, and only the services of providers who have entered into an agreement with the operator are offered free of charge.

At present many Internet content or service providers bill Internet surfers after logging their credit card number, for example.

However, many Internet surfers are reluctant to divulge their credit card number over the Internet, even to a secure site.

Also, the costs associated with payment by credit card are not negligible if the amount billed to the Internet surfer is small.

European patent EP 0 885 504 B1 recites a method of billing for data transmission networks. According to this patent, because of the decentralized aspect of the Internet Network, it is very difficult or too expensive to use the usual billing principals:
- billing based on the duration of connection between two terminals for a given transmission speed and a given distance,
- billing based on the quantity of exchange data between two terminals, as a function of the transmission data speed.

The EP 0 885 504 B1 patent teaches to insert, in the data packets that are transmitted over the Net, a toll heading including a numerical value corresponding to a credit of toll units. Such a method requires working on the communication,nodes, so that the billing operation is relatively complex. This method does not bring any solution to bill for duration of connection during an Internet session.

International application WO 00/65 493 describes a method for doing an electronic commerce transaction, in which access certificates are generated by at least one intermediary in order to avoid the transmission of data relative to means of payment over the Internet. No method of billing for duration of connection to a chargeable zone of an Internet site is described.

US patent 5 794 221 describes a method for establishing an agreement between an Internet access provider and a customer, and an agreement between the Internet access provider and a vendor site of products or services. Once those agreements have been established, the Internet access provider bills the user for the products or services he has bought to the vendor site. This patent does not describe a billing for duration of connection.

International application WO 01/61 592 describes a system only for billing applications software usage offered over the Internet by an application service provider (A.S.P.). This application teaches the possibility of billing for the running of software according to a connect time, but does not describe any method nor system to bill a connection to a chargeable zone of an Internet site, with application of several charging rates and as a function of the duration of connection, capable of being used by a large number of sites and offering sufficient security guaranties. On the contrary, this application recommends a billing system for every running, i.e. adapted to the calculations and operations executed by software when the user asks for. European patent application EP0939516 discloses a method of timing the duration of a session comprising loading a monitoring program into the user station.

Thus, there is a need for timing the duration of a session during a connection between a user station and a chargeable zone of an Internet site.

There also exists a need for easier access via the Internet to providers of chargeable contents or services.

Chargeable contents or services may be any content or service which is not freely accessible to any user having access to the network. Chargeable contents or services may be any content or service that can be charged to an individual or a company or any other kind of institution, either directly (for example by sending a bill) or indirectly (for example in exchange for other services or execution of a commercial agreement).

One aspect of the invention is to provide a method of timing the duration of a session during a connection between a user station and a chargeable zone of an Internet site according to claim 1.

The invention will be better understood after reading the following detailed description of non-limiting embodiments of the invention and examining the accompanying drawing, in which:
- Figure 1 shows an example of embodiment of the invention,
- Figure 2 is a flow chart,
- Figure 3 shows the simultaneous display of a plurality of windows corresponding to different sessions on the screen of the computer of a user,
- Figure 4 shows another example of embodiment of the method of the invention, and
- Figure 5 shows another example of embodiment of the method of the invention.

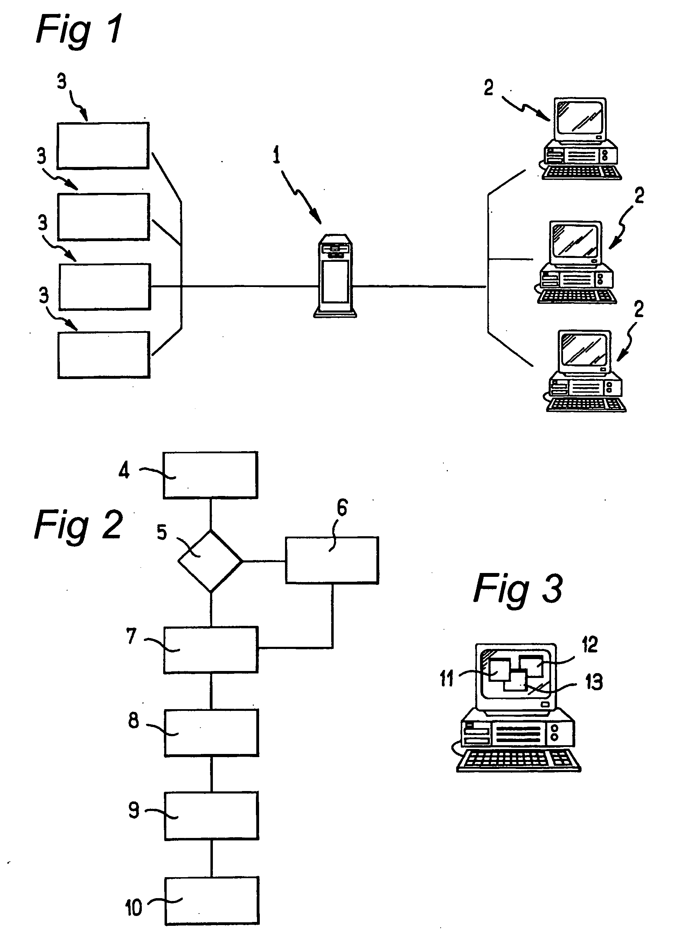

The data processing system 1 shown in Figure 1 enables users 2, in particular Internet surfers, to benefit form chargeable services and/or data provided by content and/or service providers 3 who are federated around the data processing system 1, i.e. who have entered into agreements with the administrator of the data processing system 1.

The content and/or service providers 3 can provide bandwidth, IP telephone, professional data, emulators, music, films, games or other services for consumers or professionals, for example. The foregoing list is not limiting on the invention.

The data processing system 1 includes means providing access to the content and/or service providers 3 to enable a user to log onto to them indirectly without having to enter into a subscription agreement with each of them or specify to them payment means such as a credit card number.

The data processing system 1 also includes access means enabling users to access the data processing system 1 and identify themselves and, if they are not known to the data processing system 1, to enter sufficient information to be listed, identified and debited, for example a credit card number and the card expiry date, or an identifying code included in a chip comprised in the user station.

The data processing system 1 also manages access rights, in particular when the user is a company and more than one employee of the company can log onto the data processing system 1.

In this case, the data processing system can manage access authorization as a function of the time of day and the names of the company's employees, for example, to prevent an employee accessing the system from home, outside working hours, using the log-in name of the company.

One should refer now to Figure 2.

In an initial step 4 a user logs onto the data processing system 1 via the Internet using the IP address of the data processing system 1.

In step 5 the data processing system 1 prompts the user to identify himself by entering a log-in name and a password previously selected.

In step 6, if the user is not yet listed he can enter all the necessary information and in particular specify a means of payment, such as a credit card number.

A log-in name and a password are then selected.

In step 7, if the user is already listed and has identified himself adequately, he is allowed to log onto one of the providers 3 federated around the data processing system 1.

In step 8 the data processing system 1 determines the nature of the data and/or the services consulted or consumed and selects the corresponding charging band to be applied.

In step 9 the data processing system 1 measures the duration of the connection and/or the quantity of data transferred or consulted.

In step 10 the data processing system 1 debits the account of the user according to that duration and/or that quantity. In this example the account is a personal account of the user and is directly associated with the means of payment specified to the data processing system.

Alternatively, the account could be internal to the data processing system 1, in which case billing is effected indirectly by an intermediary between the user and the data processing system 1, for example an Internet access provider who has entered into an agreement with the administrator of the data processing system 1.

In the embodiment described, the data processing system 1 includes a multi-protocol interface enabling the user to open more than one window on his screen at a time, the windows corresponding to different sessions, for example, as shown in Figure 3, a window 11 corresponding to a Minitel^{®} session and a window 13 corresponding to a 3090 emulator session.

If the data processing system 1 can access more than one bandwidth provider 3, the data processing system 1 advantageously connects a user requiring transmitting voice or video automatically to the cheapest bandwidth provider 3 at that time, for the greatest benefit to the user.

The data processing system 1 may be accessed other than via a microcomputer 2, for example by means of a mobile telephone of a pocket organizer, giving an Internet access.

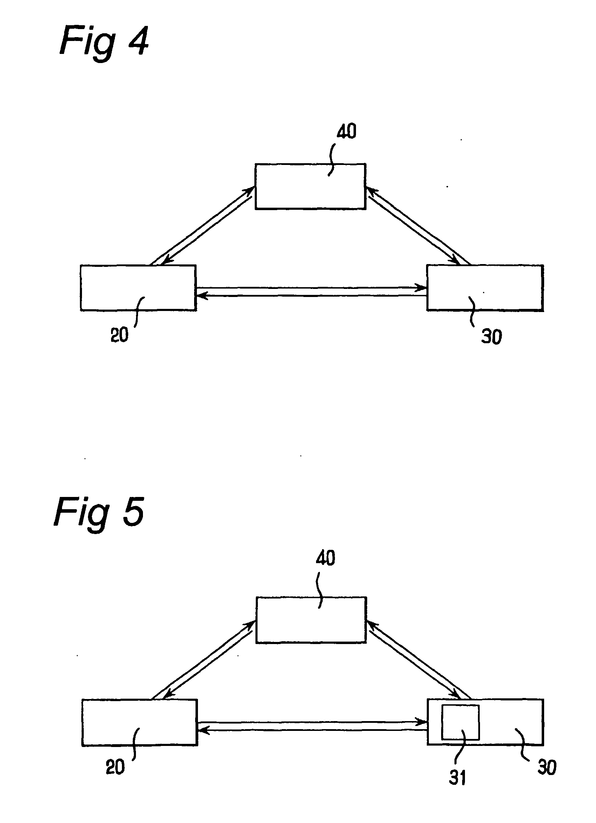

Another example will now be described with reference to Figure 4.

User station 20 connects to an Internet site 30, comprising a chargeable zone. A time-metering server 40 can exchange information with the user station 20 and Internet site 30.

The user aims for example to access to chargeable pages of the chargeable zone of the Internet site 30.

Before enabling the user station 20 to access those pages, the user station 20 and the user are identified, being asked for example for a login and a password.

In order to authenticate the user station 20 in a more secured manner, the user station's IP address and a serial number of an Ethernet network card, if the user station has one, may be also checked.

Once the user station 20 has been identified, a monitoring program of the java applet type is loaded into the user station 20.

This monitoring program executes as soon as it is loaded, and the user station 20 may access the desired chargeable pages.

The monitoring program is configured so as to, from the beginning until the end of the session of connection of the user station 20 to the chargeable zone of the Internet site 30, send periodically to the time-metering server 40 information relative to the state of the connection. The time-metering server 40 is configured so as to read information received from the monitoring program, in order to increment a connection duration counter (not shown).

The time-metering server 40 generates also codes and countersign codes at substantially constant time intervals. It sends the codes to the user station 20 and the countersign codes to the Internet site 30. The codes and countersign codes are compared, and if they satisfy a predetermined relationship, the user station 20 may access the chargeable zone.

When the user station 20 disconnects from the chargeable zone of the site 30, the monitoring program sends information relative to the end of connection to the time-metering server 40. The time-metering server 40 then ceases timing the session.

In case the user station 20 connects several times to a chargeable zone of Internet site 30, the time-metering server 40 may aggregate connection duration of several sessions, in order to establish a global billing for all the sessions. Several Internet sites may comprise chargeable zones the user station can connect to as described before. All durations of all sessions of connection to all chargeable zones of several Internet sites may be aggregated by the time-metering server 40.

In a same chargeable zone, chargeable data and/or services may be associated to different charging rates.

These chargeable data or services may correspond to pages, for example HTML pages, transmitted to the user station 20. These pages may contain information representative of a charging rate, in particular information in tag form. The monitoring program may be configured so as to send to the time-metering server 40 information related to those tags, the time-metering server 40 taking into account the charging rates when billing the user station 20.

Figure 5 shows an Internet site 30 comprising a proxy type program 31. The proxy type program 31 is in charge of replacing an URL address requested by the user station 20 by another URL address. The proxy type program 31 is also configured so as to read information contained in the pages sent to the user station 20 by the site 30 and to send this information to the time-metering server 40. The user station 20 sends to the time-metering server 40 information relative to reception of the chargeable page of the site 30 and the time-metering server 40 is configured so as to' compare this information with the information transmitted by the site 30 because of execution of the proxy type program 31.

When the information received by the time-metering server (40) satisfy a predetermined relationship, a connection duration counter is incremented. The information send by the proxy type program 31 may contain information representative of a charging rate.

Information contained in the pages sent to the user station may be transmitted to the time-metering server 40 through the monitoring program loaded on the user station.

It may also be possible according to one aspect of the invention to trace an identified user using a user station made of a mobile terminal throughout a connection to a low rate chargeable zone of an Internet site, even if there are one or more disconnections throughout the session.

The following example relates to a method enabling the traceability of the user station and of the actions of the user throughout the session.

For example, a user enters a supermarket. He connects his mobile terminal to a chargeable zone of a site, identifies himself, and begins shopping. The trolley is configured to detect and calculate the price of the items put therein. From the beginning of the session until the end of the session, the user is known, identified and traced. Once the user has finished shopping, he gives, with help of his mobile terminal, an order to pay the items contained in the trolley. Then, he receives for example a code authorizing him to leave the supermarket and the session ends.

Of course, the invention is not limited to the examples that have been described.

## Claims

1. A method of timing the duration of a session during a connection between a user station (20) and a chargeable zone of an Internet site (30), during which session the user station can access at least one of chargeable data and chargeable services of the site without disconnecting from the Internet, the method comprising:
- loading a monitoring program into the user station for execution throughout the duration of the session, said monitoring program being configured, while it is being executed, to send information relating to the state of the connection to a time-metering server (40), said information being renewed periodically throughout the session, the method being **characterised in that**:
throughout a session, the user station periodically receives varying codes of temporary validity as generated by the time-metering server,
the number of codes generated during a session is counted, and the duration of the session is determined as a function at least of the number of codes counted,
the site periodically receives varying countersign codes of temporary validity associated with the corresponding varying codes sent to the user station, these countersign codes being generated by the time-metering server, and user station access to the at least one of chargeable data and chargeable services is authorized so long as the code and the corresponding countersign code satisfy a predetermined relationship.

2. A method according to claim 1, wherein the information relating to the state of the connection is transmitted to the time-metering server via a TCP socket connection.

3. A method according to claim 1, wherein the monitoring program is contained in a hidden frame.

4. A method according to claim 1, wherein the information relating to the state of the connection is renewed in a period that is shorter than or equal to one minute.

5. A method according to claim 1, wherein further comprising determining a duration for the session, as a function at least of information received by the time-metering server due to execution of the monitoring program.

6. A method according to claim 1, wherein the monitoring program is of the Java applet type.

7. A method according to claim 1, wherein the monitoring program executes as soon as it is loaded into the user station.

8. A method according to claim 1, wherein at least one of the user station and the user is identified prior to the monitoring program being loaded into the user station.

9. A method according to claim 8, wherein code validity has a duration of not more than three minutes.

10. A method according to claim 8, wherein the codes are generated by the time-metering server at substantially constant time intervals

11. A method according to claim 1, wherein the predetermined relationship is an equality relationship.

12. A method according to claim 1, wherein a connection duration counter is incremented each time the time-metering server receives information from the monitoring program.

13. A method according to claim 1, wherein the site includes different pages associated with display temporary addresses.

14. A method according to claim 1, wherein the monitoring program is configured to warn the time-metering server in the event of disconnection from the chargeable zone.

15. A method according to claim 1, wherein the time-metering server is arranged to cease timing the session in the event of no information being received from the monitoring program over a predetermined length of time.

16. A method according to claim 1, wherein the site is configured so as to associate at least one charging rate with at least one of chargeable services and chargeable data.

17. A method according to claim 16, wherein the site includes at least one of chargeable services and chargeable data associated with charging rates stored in a database.

18. A method according to claim 17, wherein the database is stored with the site supplier or with the time-metering server.

19. A method according to claim 16, wherein the site includes pages organized in directories associated with respective charging rates.

20. A method according to claim 16, wherein the site includes pages of addresses that are organized as a function of charging rates, and wherein access to the pages is performed via a virtual host.

21. A method according to claim 1, wherein the site includes a proxy type program serving to replace an URL address request from the user station with another URL address.

22. A method according to claim 21, wherein the proxy type program is configured so as to compare the code with the corresponding countersign code and verify that the predetermined relationship is satisfied.

23. A method according to claim 21, wherein the proxy type program is configured to read information contained in a page sent to the user station and to transmit said information to the time-metering server.

24. A method according to claim 23, wherein the user station sends information to the time-metering server relating to reception of the page, and wherein the time-metering server is configured to compare said information with the information transmitted by the site because of execution of the proxy type program.

25. A method according to claim 24, wherein the time-metering server is configured to start timing a session on receiving the information relating to reception of the page by the user station.

26. A method according to claim 24, wherein the page is arranged to transmit information to the monitoring program and wherein the monitoring program is configured to transmit information relating to reception of the page to the time-metering server.

27. A method according to claim 1, wherein the site includes pages containing information representative of a charging rate, in particular information that is in tag form.

28. A method according to claim 24, wherein the information sent by the proxy type program to the time-metering server comprises a link, wherein the page loaded into the user station sends to the time-metering program a request concerning the link, and wherein this request constitutes information relative to reception of the page by the user station and at least one of starts timing a session and indicates a charging rate change.

29. A method according to claim 1, wherein on each occasion a new page is received by the user station, in particular a new HTML page corresponding to at least one of chargeable data and chargeable service, information relating to said page is sent to the time-metering server.

30. A method according to claim 1, wherein a link to access to a page is replaced by a program in javascript type language, this program being configured to execute as soon as the user activates the link and enable the access to the page, this program being also configured so as to send to the monitoring program information relative to the page loading.

31. A method according to claim 30, wherein the monitoring program is configured so as to send said information to the time-metering server.

32. A method according to claim 1, wherein content categories are associated with charging rates in order to enable to exercise control as a function of age or of parental authorization.

33. A method according to claim 1, wherein at least one of the user station and the user is identified, at least by recognizing a login and a password.

34. A method according to claim 33, wherein the login and the password are identical to the login and the password needed to connect to an Internet access supplier.

35. A method according to claim 1, wherein at least one of the user station and the user is identified by recognizing at least one intrinsic characteristic of the user station.

36. A method according to claim 1, in which the user station has an IP address, and wherein, prior to authorizing access to the chargeable zone, said IP address is compared with one or more prerecorded addresses for identifying the user.

37. A method according to claim 1, wherein the user is identified by information coming from Internet access suppliers.

38. A method according to claim 1, wherein the user station is a mobile terminal with a connection linked to an operator of one of the types GPRS, UMTS, G3, CDPD, this terminal comprising an identifying chip including a code PIN or WIM, and wherein, prior to authorizing access to the chargeable zone, said code PIN or WIM is compared with one or more prerecorded codes for identifying the user.

39. A method according to claim 1, wherein the time-metering server is configured for a given user account to aggregate connection durations to distinct sites

40. A method according to claim 1, wherein the duration of the connection to the chargeable zone is displayed on the user station.

41. A method according to claim 1, wherein the time-metering server is configured to compare the amount corresponding to the cost of various connections to the chargeable zones as accumulated with an upper limit on expenditure entered by the user, and to warn the user in the event the cost exceeds the upper limit on expenditure.

42. A method according to claim 1, wherein the monitoring program is configured to send information to the time-metering server relating to a data rate at which the user station receives chargeable data.

43. A method according to claim 1, wherein the connection durations of a plurality of users to at least one of chargeable services and chargeable data of a site are recorded, and wherein said durations are subjected to statistical processing.

44. A method according to claim 1, wherein the user station is a personal computer with an Internet connection, in particular of the xDSL type.

45. A method according to claim 1, wherein the user station is suitable for communicating over a wireless link with the Internet network.

46. A method according to claim 1, wherein the time-metering server is arranged to issue a bill on a user account associated with a mobile telephone or with a fixed telephone line or with an electricity meter, or with a bank account or with an account associated with a credit card.

47. A method according to claim 1, wherein the time-metering server is configured in such a manner as to enable a user account to be debited for transactions other than for connection time to a chargeable zone of a site.

48. A method according to claim 1, wherein the site includes a chargeable service for allocating bandwidth capacity.

49. A method according to claim 1, wherein the connection to the chargeable zone is initiated by the user station opening an e-mail sent to the user station and including a link to the chargeable zone of the site.

## Patentansprüche

1. Verfahren zum Zeitmessen der Dauer einer elektronischen Session , während eines Anschlusses von einem Benutzer-Computer(20) an einer kostenpflichtigen Zone einer Internet-Website (30), wobei der Benutzer-Computer, ohne Internet abzuschalten, zu Diensten und/oder kostenpflichtigen Daten der Website zugreifen kann, das Verfahren die folgenden Verfahrensschritte aufweisend :
- ein Überwachungsprogramm dem Benutzercomputer eingeben, Programm, das während der Dauer der Session ausgeführt wird und das derart konfiguriert wird, das es bei seiner Ausführung, dem Zeitmesserserver (40) eine Information über den Stand des Internetzugangs sendet, Information, die regelmässig während der Session erneuert wird.
- Der Benutzer-Computer (20) empfängt, regelmässig während der Session, die durch den Zeitmesserserver (40) erzeugten variablen Codes von temporären Gültigkeit.
- Die Zahl der während einer Session erzeugten Codes wird registriert und die Dauer der Session wird, wenigstens gemäss der Anzahl der registrierten Codes, bestimmt.
- DieWebsite empfängt (30) regelmässig variable Gegencodes von temporären Gültigkeit, die mit variablen entsprechenden Codes verbunden sind und dem Computeruser (20) gesendet werden, und jene Gegencodes werden durch den Zeitmesserserver erzeugt. Dem Computemutzer (20) wird der Zugriff zu Diensten und/oder kostenpflichtigen Daten erlassen, wenn der Code und der entsprechende Gegencode eine vorbestimmte Beziehung aufweisen.

2. Verfahren nach Anspruch 1, **dadurch gekennzeichnet, dass** die Information bezüglich des Stands des Anschlusses an den Zeitmessungsserver (40) durch eine socket TCP Verbindung übermittelt wird.

3. Verfahren nach Anspruch 1, **dadurch gekennzeichnet, dass** das Überwachungsprogramm in einem versteckten Frame enthalten ist.

4. Verfahren nach Anspruch 1, **dadurch gekennzeichnet, dass** die Information bezüglich des Stands des Anschlusses in einer Frist, die kleiner oder gleich einer Minute ist, erneuert wird.

5. Verfahren nach Anspruch 1, **dadurch gekennzeichnet, dass** es ausserdem die Etappe umfasst, die zur Rolle hat, eine Dauer der Session zu bestimmen, und zwar wenigstens gemäss den vom Zeitmesserserver (40) enthaltenen Informationen infolge der Ausführung des Überwachungsprogramms.

6. Verfahren nach Anspruch 1, **dadurch gekennzeichnet, dass** das Überwachungsprogramm von Typ applet Java ist.

7. Verfahren nach Anspruch 1, **dadurch gekennzeichnet, dass** das Überwachungsprogramm sofort bei der Ladung der Informationsdaten auf den Benutzerposten ausgeführt wird

8. Verfahren nach Anspruch 1, **dadurch gekennzeichnet, dass** der Benutzerposten (20) und/oder der Benutzer identifiziert wird, bevor das Überwachungsprogramm auf den Benutzerposten geladen wird.

9. Verfahren nach Anspruch 8, **dadurch gekennzeichnet, dass** die Gültigkeitsdauer des Informatikcodes geringer oder gleich 3 Minuten ist.

10. Verfahren nach Anspruch 8, **dadurch gekennzeichnet, dass** die Codes vom Zeitmesserserver in merklichen konstanten Zeitintervallen erzeugt werden..

11. Verfahren nach Anspruch 1, **dadurch gekennzeichnet, dass** die vorbestimmte Beziehung eine Beziehung der Gleichheit ist.

12. Verfahren nach Anspruch 1, **dadurch gekennzeichnet, dass** ein Kostenzahler für die Anschlussdauer inkrementiert wird, jedes Mal, wenn der Zeitmesseserver(40) Informationen vom Überwachungsprogamm erhält.

13. Verfahren nach Anspruch 1, **dadurch gekennzeichnet, dass** die Website (30) verschiedene Seiten umfasst, die mit Anzeigen temporärer Adressen verbunden sind.

14. Verfahren nach Anspruch 1, **dadurch gekennzeichnet, dass** das Überwachungsprogramm konfiguriert wird, um den Zeitmesserserver (40) im Fall einer Abschaltung der kostenpflichtigen Zone zu warnen.

15. Verfahren nach Anspruch 1, **dadurch gekennzeichnet, dass** der Zeitmesserserver (40) angeordnet ist, um aufzuhören, die Dauer der Session aufzunehmen, im Falle keine Information während einer vorbestimmten Zeitspanne vom Überwachungsprogramm empfangen wird.

16. Verfahren nach Anspruch 1, **dadurch gekennzeichnet, dass** die Website (30) konfiguriert ist, damit eine Gebührenstufe wenigstens mit einer der kostenpflichtigen Daten und/oder mit einem der kostenpflichtigen Diensten in Zusammenhang steht.

17. Verfahren nach Anspruch 16, **dadurch gekennzeichnet, dass** die Website (30) kostenpflichtige Daten und/oder Dienste umfasst, die mit in einer Datenbank registrierten Gebührenstufen in Zusammenhang stehen..

18. Verfahren nach Anspruch 17, **dadurch gekennzeichnet, dass** die Datenbank beim Web-Provider oder über den Zeitmesserserver gespeichert sind.

19. Verfahren nach Anspruch 16, **dadurch gekennzeichnet, dass** die Website (30)klassifiziete Zeiten umfasst, die sich in mit jeweiligen Gebührenstufen assozierten Registern befinden.

20. Verfahren nach Anspruch 16, **dadurch gekennzeichnet, dass** die Website (30) Seiten umfasst, deren Adressen gemäss Gebührenstufen organisiert werden, und **dadurch**, dass der Zugriff zu diesen Seiten durch einen virtual host durchgeführt wird.

21. Verfahren nach Anspruch 1, **dadurch gekennzeichnet, dass** die Website (30) ein Programm Typ proxy (31)umfasst , dessen Rolle ist, bei Gesuch einer URL-Adresse vom Benutzerposten diese Adresse gegen eine andere URL-Adresse auszutauschen.

22. Verfahren nach Anspruch 21, **dadurch gekennzeichnet, dass** das Programm von Typ so gestaltet wird, dass es den Code mit dem entsprechenden Gegencode vergleicht, und prüft, dass eine vorbestimmte Beziehung erfüllt ist.

23. Verfahren nach Anspruch 21, **dadurch gekennzeichnet, dass** das Programm von Typ proxy (31) so gestaltet wird, dass es eine Information, die sich in einer an den Benutzerposten (20)gerichteten Seite befindet, liest und dass es diese Information dem Zeitmesserserver (40) übermittelt

24. Verfahren nach Anspruch 23, **dadurch gekennzeichnet, dass** der Benutzerposten (20) an den Zeitmesserserver (40) eine Information zum Eingang der Seite sendet und auch **dadurch gekennzeichnet, dass** der Zeitmesserserver (40) so gestaltet ist, dass er diese Information mit der Information, die von der Website mittels der Ausführung des Programms proxy übermittelt wurde, vergleicht

25. Verfahren nach Anspruch 24, **dadurch gekennzeichnet, dass** der Zeitmesserserver (40) so gestaltet wird, dass er die Zeitmessung einer Session am Empfang der Information auslöst, im Bezug der Aufnahme der Seite vom Benutzerposten.

26. Verfahren nach irgendeinem der Ansprüche 24, **dadurch gekennzeichnet, dass** die Seite angeordnet ist, um eine Information dem Überwachungsprogramm zu übermitteln und **dadurch gekennzeichnet, dass** das letztere so gestaltet wird, dass es dem Zeitmesserserver (40)die Information, die den Empfang der Seite betrifft, übermittelt

27. Verfahren nach Anspruch 1, **dadurch gekennzeichnet, dass** die Website (30) Seiten umfasst, welche insbesondere in Form von Tag, eine repräsentative Information eines Preisbildungslagers enthalten.

28. Verfahren nach Anspruch 24, **dadurch gekennzeichnet, dass** die Information, die vom Programm Typ proxy an den Zeitmesserserver gesendet wird, ein Link ist, auch **dadurch**, dass die auf den Benutzerposten geladene Seite, dem Zeitmesserserver eine Anforderung sendet, die dieses Link betrifft, und **dadurch** dass diese Anforderung die Information zum Eingang der Seite vom Benutzerposten bildet und die Zeitmessung einer Session auslöst und/oder die Änderung des Preisbildungslagers anzeigt

29. Verfahren nach Anspruch 1, **dadurch gekennzeichnet, dass**, dem Zeitmesserserver (40),bei jedem Empfang einer neuen Seite durch den Benutzerposten (20), insbesondere einer neuen HTML-Seite, die einem Dienst und/oder kostenpflichtigen Daten entspricht, eine Information zum Empfang dieser Seite gesendet wird.

30. Verfahren nach Anspruch 1, **dadurch gekennzeichnet, dass** ein Hyperlink, das ermöglicht, zu einer Seite zu gelangen, durch ein Programm in der Sprache vom javascript Typ ersetzt wird ;dieses Programm wird so gestaltet, dass es sich ausführt, wenn der Benutzer das Hyperlink aktiviert und dem Benutzer den Zugang zu der Seite gibt ; übrigens wird dieses Programm auch so gestaltet, dass es dem Überwachungsprogramm eine Information über die Ladung der Seite gibt.

31. Verfahren nach Anspruch 30, **dadurch gekennzeichnet, dass** das Überwachungsprogramm konfiguriert ist, um dem Zeitmesserserver die besagte Information zu senden.

32. Verfahren nach Anspruch 1, **dadurch gekennzeichnet, dass** Inhaltskategorien mit Gebührenstufen im Zusammenhang stehen, damit eine Kontrolle, dem Alter gemäss oder vor allem einer elterlichen Genehmigung gemäss, ausgeübt werden kann.

33. Verfahren nach Anspruch 1, **dadurch gekennzeichnet, dass** der Benutzerposten (20) und/oder der Benutzer mindestens mittels des Authentifizierens eines Logins und Passworts identifiziert wird

34. Verfahren nach Anspruch 34, **dadurch gekennzeichnet, dass** das Login und das Passwort mit dem Login und dem Passwort identisch sind, die erforderlich sind, um sich einem Internetzugangsversorger anzuschliessen.

35. Verfahren nach Anspruch 1, **dadurch gekennzeichnet, dass** der Benutzer-Computer (20) und/oder der Benutzer mittels der Anerkennung von wenigstens einem charakterischen Merkmal des Benutzer-Computers identifiziert wird.

36. Verfahren nach Anspruch 1, **dadurch gekennzeichnet, dass** der Benutzer-Computer (20) eine IP-Adresse hat, die man mit einer oder mehreren vorregistrierten Adressen vergleicht, um den Benutzer zu identifizieren, bevor ihm zu gestatten, zur kostenpflichtigen Zone zu gelangen.

37. Verfahren nach Anspruch 1, **dadurch gekennzeichnet, dass** das Authentifizieren des Benutzers durch eine aus den Internetzugangsversorgern stammende Information erfolgt.

38. Verfahren nach Anspruch 1, **dadurch gekennzeichnet, dass**, wenn der Benutzer einen Laptop mit einem Anschluss benutzt, der mit einem Operateur von Typ GPRS, UMTS, G3, CDPD verbunden ist, und der einen ihn mit einem identifizierenden Chip enthält, mit einem Zugangscode PIN oder WIM, man diesen Pin- oder Wimcode mit einem oder mehreren vorregistrierten Coden vergleicht, um den Benutzer zu identifizieren, bevor man ihm den Zugang zur kostenpflichtigen Zone gestattet.

39. Verfahren nach Anspruch 1, **dadurch gekennzeichnet, dass** der Zeitmesserserver (40) konfiguriert ist, um für dasselbe Konto-Benutzer die Dauern von Anschluss zu verschiedenen Websiten anzusammeln.

40. Verfahren nach Anspruch 1, **dadurch gekennzeichnet, dass** man auf dem Benutzerposten die Dauer des Anschlusses an der kostenpflichtigen Zone anzeigt.

41. Verfahren nach Anspruch 1, **dadurch gekennzeichnet, dass** der Zeitmesserserver konfiguriert ist, um den angehäuften Betrag von den Verbindungskosten und eine vom Benutzer eingetragene Verbrauchsobergrenze zu vergleichen und den Benutzerposten bei Überschreitung der Kosten der Verbrauchsobergrenze zu benachritigen.

42. Verfahren nach Anspruch 1, **dadurch gekennzeichnet, dass** das Überwachungsprogramm konfiguriert ist, um dem Zeitmesserserver (40) eine Information über die Ausweisung eines Sollsaldos der kostenpflichtigen Daten des Benutzer-Computers zu senden.

43. Verfahren nach Anspruch 1, **dadurch gekennzeichnet, dass** Zugriffdauern von mehreren Benutzern zu Daten und/oder kostenpflichtigen Diensten einer Website zunächst registriert werden und dann statistisch verarbeitet werden

44. Verfahren nach Anspruch 1, **dadurch gekennzeichnet, dass** der Benutzer-Computer (20) ein Personalcomputer mit einem Internet-Anschluss, besonders von Typ xDSL ist.

45. Verfahren nach Anspruch 1, **dadurch gekennzeichnet, dass** der Benutzer-Computer (20) dazu geeignet ist, durch eine drahltose vernetzte Steuerung mit dem Intenet-Netzwerk zu kommunizieren.

46. Verfahren nach Anspruch 1, **dadurch gekennzeichnet, dass** der Zeitmesserserver(40) gestaltet ist, um eine Rechnung über ein Benutzerkonto herauszubringen, das zu einem Handy oder zu einer Fernsprecherleitung oder zu einem Stromzähler, oder noch zu einem Bankkonto oder Kreditkarte verbunden ist.

47. Verfahren nach Anspruch 1, **dadurch gekennzeichnet, dass** der Zeitmesserserver(40) so gestaltet ist, dass er fähig ist, ein Benutzerkonto für andere Handlungen als einen Zugriff zur kostenpflichtigen Zone einer Website zu belasten.

48. Verfahren nach Anspruch 1, **dadurch gekennzeichnet, dass** die Website (30) einen kostenpflichtigen Dienst mit Beihilfe für eine Brandweitekapazität umfasst.

49. Verfahren nach Anspruch 1, **dadurch gekennzeichnet, dass** der Zugang an der kostenpflichtigen Zone durch die Eröffnung einer Email ab dem Benutzer-Computer verursacht wird, Email, die dem Benutzer-Computer gesendet wird und die ein Link zur kostenpflichtigen Zone beträgt.

## Revendications

1. Procédé pour chronométrer la durée d'une session, lors d'une connexion par un poste utilisateur (20) à une zone payante d'un site Internet (30), pendant laquelle le poste utilisateur peut accéder, sans déconnexion d'Internet, à des services et/ou données payants du site, ce procédé comportant l'étape suivante :
- charger sur le poste utilisateur un programme de surveillance apte à s'exécuter pendant la durée de la session, ce programme de surveillance étant configuré pour, lors de son exécution, envoyer à un serveur de chronométrage (40) une information relative à l'état de la connexion, cette information étant renouvelée périodiquement au cours de la session.
- Le Procédé étant **caractérisé par le fait que** le poste utilisateur (20) reçoit périodiquement, lors de la session, des codes variables à validité temporaire générés par le serveur de chronométrage (40).
- Le nombre de codes générés pendant une session est comptabilisé et la durée de la session est déterminée, au moins en fonction du nombre de codes comptabilisé,.
- Le site (30) reçoit périodiquement des contre-codes variables, à validité temporaire, associés à des codes variables correspondants envoyés au poste utilisateur (20), ces contre-codes étant générés par le serveur de chronométrage (40), et que l'on autorise l'accès par le poste utilisateur (20) aux services et/ou aux données payantes lorsque le code et le contre-code correspondant vérifient une relation prédéterminée

2. Procédé selon la revendication 1, **caractérisé par le fait que** l'information relative à l'état de la connexion est transmise au serveur de chronométrage (40) par une liaison socket TCP.

3. Procédé selon la revendication 1, **caractérisé par le fait que** le programme de surveillance est contenu dans un frame caché.

4. Procédé selon la revendication 1, **caractérisé par le fait que** l'information relative à l'état de la connexion est renouvelée dans un délai inférieur ou égal à une minute.

5. Procédé selon la revendication 1, **caractérisé par le fait qu'**il comporte en outre l'étape consistant à déterminer, au moins en fonction des informations reçues par le serveur de chronométrage (40) du fait de l'exécution du programme de surveillance, une durée de la session.

6. Procédé selon la revendication 1, **caractérisé par le fait que** le programme de surveillance est du type applet Java.

7. Procédé selon la revendication 1, **caractérisé par le fait que** le programme de surveillance s'exécute dès son chargement sur le poste utilisateur.

8. Procédé selon la revendication 1, **caractérisé par le fait que** le poste utilisateur (20) et/ou l'utilisateur est identifié avant que le programme de surveillance soit chargé sur le poste utilisateur (20).

9. Procédé selon la revendication 8, **caractérisé par le fait que** la durée de validité du code est inférieure ou égale à trois minutes.

10. Procédé selon la revendication 8, **caractérisé par le fait que** les codes sont générés par le serveur de chronométrage (40) à des intervalles de temps sensiblement constants..

11. Procédé selon la revendication 1, **caractérisé par le fait que** la relation prédéterminée est une relation d'égalité.

12. Procédé selon la revendication 1, **caractérisé par le fait que** l'on incrémente un compteur de durée de connexion à chaque réception par le serveur de chronométrage (40) d'une information reçue du programme de surveillance.

13. Procédé selon la revendication 1, **caractérisé par le fait que** le site (30) comporte des pages différentes auxquelles sont associées des adresses temporaires d'affichage.

14. Procédé selon la revendication 1, **caractérisé par le fait que** le programme de surveillance est configuré pour avertir le serveur de chronométrage (40) en cas de déconnexion de la zone payante.

15. Procédé selon la revendication 1, **caractérisé par le fait que** le serveur de chronométrage (40) est agencé pour cesser de chronométrer la session en l'absence de réception, pendant une durée prédéterminée, d'information du programme de surveillance.

16. Procédé selon la revendication 1, **caractérisé par le fait que** le site (30) est configuré de manière à associer à des données et/ou services payants au moins un palier de tarification.

17. Procédé selon la revendication 16, **caractérisé par le fait que** le site (30) comporte des données et/ou services payants associés à des paliers de tarification enregistrés dans une base de données.

18. Procédé selon la revendication 17, **caractérisé par le fait que** la base de données est stockée chez le fournisseur du site ou sur le serveur de chronométrage.

19. Procédé selon la revendication 16, **caractérisé par le fait que** le site (30) comporte des pages classées dans des répertoires associés à des paliers de tarification respectifs.

20. Procédé selon la revendication 16, **caractérisé par le fait que** le site (30) comporte des pages, dont les adresses sont organisées en fonction de paliers de tarification, et **par le fait que** l'accès aux pages s'effectue par le biais d'un virtual host.

21. Procédé selon la revendication 1, **caractérisé par le fait que** le site (30) comporte un programme de type proxy (31) chargé de substituer, à une requête d'adresse URL du poste utilisateur (20), une autre adresse URL.

22. Procédé selon la revendication 21, **caractérisé par le fait que** le programme de type proxy est configuré pour comparer le code et le contre-code correspondant et vérifier si une relation prédéterminée est satisfaite.

23. Procédé selon la revendication 21, **caractérisé par le fait que** le programme de type proxy (31) est configuré pour lire une information contenue dans une page adressée au poste utilisateur (20) et transmettre cette information au serveur de chronométrage (40).

24. Procédé selon la revendication 23, **caractérisé par le fait que** le poste utilisateur (20) adresse au serveur de chronométrage (40) une information relative à la réception de la page, et **par le fait que** le serveur de chronométrage (40) est configuré pour comparer cette information à l'information (30) transmise par le site du fait de l'exécution du programme de type proxy (31).

25. Procédé selon la revendication 24, **caractérisé par le fait que** le serveur de chronométrage (40) est configuré pour déclencher le chronométrage d'une session à la réception de l'information relative à la réception de la page par le poste utilisateur.

26. Procédé selon l'une quelconque des revendications 24, **caractérisé par le fait que** la page est agencée pour transmettre une information au programme de surveillance et **par le fait que** ce dernier est configuré pour transmettre au serveur de chronométrage (40) l'information relative à la réception de la page.

27. Procédé selon la revendication 1, **caractérisé par le fait que** le site (30) comporte des pages contenant, notamment sous forme de tag, une information représentative d'un palier de tarification.

28. Procédé selon la revendication 24, **caractérisé par le fait que** l'information envoyée par le programme de type proxy au serveur de chronométrage est un lien, **par le fait que** la page chargée sur le poste utilisateur envoie au serveur de chronométrage une requête concernant le lien, et **par le fait que** cette requête constitue l'information relative à la réception de la page par le poste utilisateur et déclenche le chronométrage d'une session et/ou indique le changement de palier de tarification.

29. Procédé selon la revendication 1, **caractérisé par le fait que** l'on envoie au serveur de chronométrage (40), à chaque réception d'une nouvelle page par le poste utilisateur (20), notamment une nouvelle page HTML, correspondant à un service et/ou à des données payantes, une information relative à la réception de cette page.

30. Procédé selon la revendication 1, **caractérisé par le fait que** l'on remplace un lien permettant au poste utilisateur d'accéder à une page, par un programme en langage de type javascript, ce programme étant configuré pour s'exécuter lorsque l'utilisateur active le lien, et permettre au poste utilisateur d'accéder à la page, ce programme étant en outre configuré pour envoyer au programme de surveillance une information relative au chargement de la page.

31. Procédé selon la revendication 30, **caractérisé par le fait que** le programme de surveillance est configuré pour envoyer au serveur de chronométrage ladite information.

32. Procédé selon la revendication 1, **caractérisé par le fait que** des catégories de contenus sont associées à des paliers de tarification afin de permettre d'exercer un contrôle en fonction de l'âge ou d'une autorisation parentale, notamment.

33. Procédé selon la revendication 1, **caractérisé par le fait que** le poste utilisateur (20) et/ou l'utilisateur est identifié au moins par la reconnaissance d'un login et d'un mot de passe.

34. Procédé selon la revendication 34, **caractérisé par le fait que** le login et le mot de passe sont identiques au login et au mot de passe nécessaires pour se connecter à un fournisseur d'accès à Internet.

35. Procédé selon la revendication 1, **caractérisé par le fait que** le poste utilisateur (20) et/ou l'utilisateur est identifié par la reconnaissance d'au moins une caractéristique intrinsèque du poste utilisateur.

36. Procédé selon la revendication 1, le poste utilisateur (20) ayant une adresse IP, **caractérisé par le fait que** l'on compare cette adresse IP avec une ou plusieurs adresses pré-enregistrées pour identifier l'utilisateur avant de l'autoriser à accéder à la zone payante.

37. Procédé selon la revendication 1, **caractérisé par le fait que** l'utilisateur est identifié par une information provenant de fournisseurs d'accès à Internet.

38. Procédé selon la revendication 1, **caractérisé par le fait que**, lorsque l'utilisateur utilise un terminal portable, avec une connexion liée à un opérateur de type GPRS, UMTS, G3, CDPD, et contenant une puce l'identifiant avec un code PIN ou WIM, on compare ce code PIN ou WIM avec un ou plusieurs codes préenregistrés pour identifier l'utilisateur avant de l'autoriser à accéder à la zone payante.

39. Procédé selon la revendication 1, **caractérisé par le fait que** le serveur de chronométrage (40) est configuré pour agréger pour un même compte utilisateur des durées de connexion à des sites distincts.

40. Procédé selon la revendication 1, **caractérisé par le fait que** l'on affiche sur le poste utilisateur la durée de connexion à la zone payante.

41. Procédé selon la revendication 1, **caractérisé par le fait que** le serveur de chronométrage est configuré pour comparer le montant cumulé des coûts de connexion et un plafond de consommation entré par l'utilisateur, et avertir le poste utilisateur dès qu'il y a dépassement du plafond de consommation.

42. Procédé selon la revendication 1, **caractérisé par le fait que** le programme de surveillance est configuré pour envoyer au serveur de chronométrage (40) une information relative à un débit de réception de données payantes par le poste utilisateur.

43. Procédé selon la revendication 1, **caractérisé par le fait que** l'on enregistre les durées de connexion d'une pluralité d'utilisateurs à des données et/ou services payants d'un site et que l'on effectue un traitement statistique de ces durées.

44. Procédé selon la revendication 1, **caractérisé par le fait que** le poste utilisateur (20) est un ordinateur personnel avec une connexion Internet de type xDSL notamment.

45. Procédé selon la revendication 1, **caractérisé par le fait que** le poste utilisateur (20) est apte à communiquer par une liaison sans fil avec le réseau Internet.

46. Procédé selon la revendication 1, **caractérisé par le fait que** le serveur de chronométrage (40) est agencé pour émettre une facture sur un compte utilisateur associé à un téléphone portable ou à une ligne téléphonique fixe ou à un compteur électrique, ou à un compte bancaire ou associé à une carte de crédit.

47. Procédé selon la revendication 1, **caractérisé par le fait que** le serveur de chronométrage (40) est configuré de manière à permettre de débiter un compte utilisateur pour un acte autre qu'une connexion à une zone payante d'un site.

48. Procédé selon la revendication 1, **caractérisé par le fait que** le site (30) comporte un service payant d'allocation de capacité de bande passante.

49. Procédé selon la revendication 1, **caractérisé par le fait que** la connexion à la zone payante est provoquée par l'ouverture depuis le poste utilisateur d'un e-mail envoyé au poste utilisateur et comportant un lien vers la zone payante du site.
